# EUROPEAN PATENT SPECIFICATION

(11) **EP 1 803 203 B1**
(45) Date of publication and mention of the grant of the patent: **07.12.2011**
(21) Application number: 05808467.4
(22) Date of filing: 10.10.2005
(51) Int. Cl.: H02J 7/35

(54) **APPARATUS AND METHOD FOR CHARGING AN ACCUMULATOR**
VORRICHTUNG UND VERFAHREN ZUM LADEN EINES AKKUMULATORS
APPAREIL DESTINE A CHARGER UN ACCUMULATEUR DE CHARGE ELECTRIQUE

(30) Priority: 14.10.2004 NL 1027247
(43) Date of publication of application: 04.07.2007
(73) Proprietor: Tendris Solutions B.V., 1411 KC Naarden (NL)
(72) Inventor: NEEB, Taco, Wijnand, NL-1394 PE Nederhorst Den Berg (NL); VAN DER HILST, Ramon, Philipppe, NL-3749 AV Lage Vuursche (NL)
(74) Representative: Rasser, Jacobus Cornelis
(86) International application number: PCT/NL2005/050011
(87) International publication number: WO 2006/041296

(56) References cited:
- WO-A-02/33311
- FR-A- 2 810 809
- US-A- 4 134 057

## Description

The invention relates to an apparatus for charging an accumulator of electrical charge, comprising
an apparatus for generating electrical current by conversion of energy supplied externally in a form other than electrical energy and for supplying current at an output voltage differential, and
terminals for supplying charging current to an accumulator to be charged at an imposed voltage differential.

The invention also relates to a method of charging an accumulator of electrical charge, comprising
generating electrical current by conversion of energy supplied externally in a form other than electrical energy and supplying current at an output voltage differential, and
supplying charging current to an accumulator to be charged at an imposed voltage differential.

The invention also relates to the use of such an apparatus.

US-patent 4,134,057 describes a device for enabling an accumulator to be recharged from a source of electrical energy, in particular photo-sensitive elements. The photo-sensitive elements supply electrical current to a switching arrangement which is arranged to switch between a circuit topology in which the photo-sensitive elements are connected in parallel to a capacitor, and a topology in which the capacitor and the photo-sensitive elements are connected in series. In the parallel circuit, the photo-sensitive elements charge the capacitor. The capacitor discharges in the series circuit.

It is known to charge an accumulator or battery by means of a solar panel. A problem associated with this is that the voltage supplied by a single photovoltaic cell is about 0.45 V, which is not sufficient to charge the most commonly used batteries and accumulators. For this reason, a solar panel generally comprises a series-connection of photovoltaic cells. A disadvantage of this is that very little power is supplied at low light incidence, so that charging takes a very long time. Furthermore, the sum of the voltages of cells connected in series is often still too low then. A parallel connection of photovoltaic cells in combination with a voltage amplifier doesn't alleviate this problem in a satisfactory way, due to the energy losses that occur.

The invention aims to provide an apparatus of the type described above, which also under conditions of external supply of energy with a low intensity in a form other than electrical energy, can charge an accumulator relatively quickly, efficiently and in a simple way.

This object is achieved by the apparatus according to claim 1 and by a method according to claim 12.

Because a second accumulator is connected in series with the apparatus for generating electrical current, such that a voltage differential across the series-connection is larger than the output voltage differential of the current-generating apparatus, use of a voltage amplifier or current-generating apparatus consisting of a series connection of similar current-generating elements is superfluous. The apparatus is much less dependent on the external supply of energy for supplying a sufficiently high charging voltage.

In a preferred embodiment, the apparatus for supplying electrical current comprises at least one photovoltaic cell.

This variant has the advantage of being independent of the mains.

Preferably, the apparatus for supplying electrical current comprises a parallel connection of at least two current-generating cells, preferably photovoltaic cells.

In this embodiment, maximum use is made of a certain available surface area of the photovoltaic apparatus. The current supplied by the individual cells is additive, so that a relatively high power is delivered, even at low levels of incident light. This has as a consequence that, even at low light incidence, an accumulator can be charged rapidly. The sensitivity is thus improved whilst the charging time is shortened. At very high light incidence, the maximum charging voltage of the accumulator to be charged will not easily be surpassed, so that voltage dividers, with resistors that dissipate energy, are superfluous. This effect is also achieved with apparatus that converts incident heat radiation into electrical energy. In, for example, fuel cells, a relatively compact apparatus, which still supplies a lot of current, is obtained by connection in parallel.

Preferably, the second accumulator of electrical charge comprises at least one electrochemical cell, more preferably at least one lead-sulphate battery.

This embodiment has the advantage of simplicity. Electrochemical cells supply a well-defined voltage differential, so that the apparatus can readily be designed to supply the charging voltage necessary for the accumulator to be charged.

Preferably, the current-generating apparatus is arranged to supply an output voltage differential within a range lying substantially within a range bounded by the difference between the maximum permissible charging voltage and the voltage in discharged, state of the accumulator to be charged.

In that way, differences in the external supply of energy cannot lead to prolonged exceeding of the maximum charging voltage, or to too low a charging voltage. This improves the efficiency of the apparatus.

In a preferred embodiment, the second accumulator exhibits a voltage differential equal to or greater than a terminal voltage of an accumulator to be charged when in a discharged, state under load.

In that way, no additional voltage sources or amplifiers are needed to attain the required charging voltage.

According to another aspect of the invention, the apparatus according to the invention is used to charge a lead-sulphate battery.

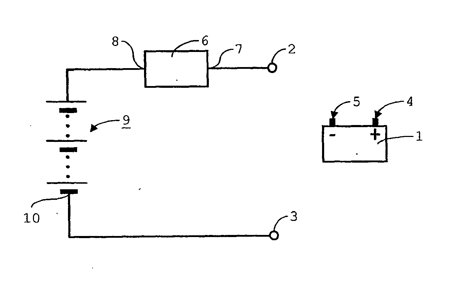

The invention will be explained below with reference to the accompanying drawing, in which an example of an apparatus for charging an accumulator is shown in a very schematic way.

The apparatus shown in the figure is used in the depicted example to charge a battery 1. By this is meant in this context a device comprising at least one electrochemical cell. In the electrochemical cell(s), electrical energy is converted to chemical energy during charging, and chemical energy to electrical energy during discharging. The battery 1 is preferably a lead-sulphate battery, for example a battery for a vehicle. In the cells of such a battery, as is known, the electrodes are made of lead and lead oxide (possibly with additives), and the electrolyte is substantially formed by sulphuric acid. The apparatus is also usable, for example for charging nickel cadmium batteries and sodium-sulphur batteries. The application in connection with lead-sulphate batteries is advantageous, because the apparatus operates substantially independently of temperature, as will be explained. Lead-sulphate batteries, in particular in the form of vehicle batteries, are also adapted to operate over a large temperature range. Thus, the assembly of the battery to be charged and the charging apparatus is particularly suitable for use in capturing externally supplied energy at remote locations. Other types of battery often require a heating arrangement.

Although the apparatus is preferably used to charge such a battery 1, it is also usable in charging other accumulators of electrical charge. Examples are assemblies of one or more capacitors, for example so-called super capacitors, fuel cells and superconducting current loops.

To charge the battery 1, a first terminal 2 is connected to a positive pole 4 and a second terminal 3 is connected to a negative pole 5 of the battery 1. The positive pole 4 is the pole with, in use, the highest voltage of the two poles 4,5.

Electrical current is supplied by an apparatus for generating electrical current by conversion of energy supplied externally in a form other than electrical energy. In this example, that apparatus comprises a photovoltaic apparatus 6, which converts light energy into electrical energy. Alternatively, a windmill or thermo-electric apparatus is possible. The former converts kinetic energy into electrical energy, whereas the latter converts heat into electrical energy.

The photovoltaic apparatus 6 also possesses a positive terminal 7 and a negative terminal 8. During current supply, an output voltage differential is established, the voltage difference between the positive terminal 7 and the negative terminal 8, wherein the positive terminal 7 has the higher voltage.

A connection to the mains is not required in the apparatus shown, because the circuit further comprises only a second battery 9. The second battery 9 is connected in series to the photovoltaic apparatus 6, such that the voltage differential across the series connection is larger than the output voltage differential of the photovoltaic apparatus 6. The two voltages are thus additive. Because other active components are absent, the charging voltage equals the sum voltage, bar any voltage drop in the terminals 2,3. The charging apparatus is thus arranged such that the sum voltage is substantially made available across the terminals. The negative pole 5 of the battery 1 to be charged is directly connected to a negative pole 10 of the second battery 9. A variant, in which a positive pole of the battery to be charged is directly connected to the positive pole of the second battery, and the apparatus for supplying current is connected between the negative poles, is also possible. Such a variant functions equally well. It has been found that direct connection of poles of equal polarity leads to high charging currents, so that the battery 1 to be charged is charged quickly.

The second battery 9 is preferably a lead-sulphate battery, more preferably a traction battery or semi-traction battery. Such a battery has the property that the majority of the energy contents, about eighty percent in the case of a traction battery, for example, and about fifty percent in the case of a semi-traction battery, is effectively usable. This can have been achieved by using a large number of thick lead plates as electrodes, so that a larger part of the sulphate present in the electrolyte is used. The stored energy only becomes available over a relatively longer period, as the battery is less suited to briefly supplying a high current in the way a starter battery is able to.

The photovoltaic apparatus 6 comprises an assembly of photovoltaic cells (not shown further), which each supply a voltage in the range of 0.35V to 0.65 V, on average 0.45 V. The photovoltaic apparatus 6 comprises a parallel connection of at least two photovoltaic cells. In each branch of the parallel connection a number of photovoltaic cells may be connected in series, to supply an output voltage over the positive and negative terminals 7,8 within the desired range. This desired range lies substantially within a range bounded by the difference between the maximum admissible charge current and the voltage differential in discharged state of the battery 1. For a conventional lead-sulphate battery, for example, the maximum charging current is a value in the range of 12.8 V to 13.8 V. The voltage differential in discharged state is a value in a range about 10.8 V. By connecting at a minimum two, in a certain preferred variant six, photovoltaic cells in series in each branch of the parallel connection it can be ensured that the voltage variations at various light intensities seldom necessitate interruption of the charging process. Alternatively, for brief continuous charging, only one photovoltaic cell may also be included in each branch of the parallel connection. The remaining voltage differential is supplied by the second battery 9. In case the second battery 9 is of the same type as the battery 1 to be charged, and is included in the circuit in discharged state, this is automatically the case, without further control being necessary. It is pointed out that the same principles of the design can be applied to advantage if the photovoltaic apparatus is replaced by a thermovoltaic apparatus, comprising cells that use the Seebeck effect to convert heat into electrical current.

Because only a small number of photovoltaic cells are connected in series, more charging current is generated per unit of surface area. It has even proved possible to charge a battery under moonlight.

The shown embodiment has the advantage of being simple. In the example, the second battery 9 is also a lead-sulphate battery, substantially of the same type as the battery to be charged, as mentioned above. This has the advantage that the apparatus is simple to construct. In other embodiments the second accumulator of electrical charge comprises a parallel connection of such batteries, or a series-connection of batteries with a lower nominal voltage differential. The second battery 9 may also be a gel battery. Also, instead of accumulators with electrochemical cells, super-capacitors or fuel cells may be used.

The invention is not limited to the embodiments described above, which may be modified within the scope of the accompanying claims. 6. In a certain variant of the method of charging a battery, a pulse, preferably an electrical current pulse, is sent through the second battery 9 after supplying current to the battery 1 to be charged, suitable to reverse formation of crystals at least partly.

## Claims

1. Apparatus for charging an accumulator (1) of electrical charge, comprising an apparatus (6) for generating electrical current by conversion of energy supplied externally in a form other than electrical energy and for supplying current at an output voltage differential, and terminals (2,3) for supplying charging current to said accumulator (1) to be charged at an imposed voltage differential, the apparatus is further provided with a second accumulator (9) of electrical charge, which is connected in series to the apparatus (6) for generating electrical current such that other active components are absent from the apparatus for charging and sum voltage of the apparatus (6) for generating electrical current and the second accumulator (9) is substantially made available across the terminals.

2. Apparatus according to claim 1, wherein the apparatus (6) for generating electrical current comprises at least one photovoltaic cell.

3. Apparatus according to claim 1, wherein the apparatus (6) for generating electrical current includes only one photovoltaic cell.

4. Apparatus according to claim 1 or 2, wherein the apparatus (6) for generating electrical current comprises a parallel connection of at least two photovoltaic cells.

5. Apparatus according to claim 1 or 2, wherein the apparatus (6) for generating electrical current comprises a parallel connection of two photovoltaic cells, wherein each branch of the parallel connection includes only one photovoltaic cell.

6. Apparatus according to any one of the preceding claims, wherein the second accumulator (9) of electrical charge comprises at least one electrochemical cell.

7. Apparatus according to any one of the preceding claims, wherein the second accumulator (9) of electrical charge comprises at least one lead-sulphate battery.

8. Apparatus according to claim 6 or 7, wherein the second accumulator (9) of electrical charge comprises at least one traction battery or semi-traction battery.

9. Apparatus according to any one of the preceding claims, wherein one of the terminals (2,3) connects a negative terminal (5) of a connected accumulator (1) to be charged directly to a negative terminal (10) of the second accumulator (9).

10. Apparatus according to any one of the preceding claims, wherein the current-generating apparatus (6) is arranged to supply an output voltage differential within a range lying substantially within a range bounded by the difference between the maximum permissible charging voltage and the voltage in discharged, state under load of the accumulator (1) to be charged.

11. Apparatus according to claim 10, wherein the second accumulator (9) exhibits a voltage differential equal to or greater than a terminal voltage of an accumulator (1) to be charged when in a discharged, state under load.

12. Method of charging an accumulator (1) of electrical charge, comprising providing an apparatus according to any one of claims 1-11, connecting it to the accumulator (1) to be charged and through operation of the apparatus generating electrical current by conversion of energy supplied externally in a form other than electrical energy and supplying current at an output voltage differential, and supplying a charging current to the accumulator (1) to be charged at an imposed voltage differential,

## Patentansprüche

1. Vorrichtung zum Aufladen eines Akkumulators (1) elektrischer Ladung, umfassend eine Vorrichtung (6) zur Erzeugung von elektrischem Strom durch Umwandlung von Energie, die extern in einer anderen Form denn als elektrische Energie zugeführt wird, und zur Lieferung von Strom mit einem Ausgangsspannungsdifferential sowie Anschlüsse (2, 3) zur Lieferung von Ladestrom an den aufzuladenden Akkumulator (1) mit dem aufgezwungenen Spannungsdifferential, wobei die Vorrichtung weiterhin mit einem zweiten Akkumulator (9) elektrischer Ladung versehen ist, der mit der Vorrichtung (6) zur Erzeugung von elektrischem Strom in Reihe geschaltet ist, so dass andere aktive Komponenten bei der Vorrichtung zum Aufladen fehlen und die Summenspannung der Vorrichtung (6) zur Erzeugung von elektrischem Strom und des zweiten Akkumulators (9) im Wesentlichen über die Anschlüsse zur Verfügung gestellt wird.

2. Vorrichtung gemäß Anspruch 1, wobei die Vorrichtung (6) zur Erzeugung von elektrischem Strom wenigstens eine Photovoltaikzelle umfasst.

3. Vorrichtung gemäß Anspruch 1, wobei die Vorrichtung (6) zur Erzeugung von elektrischem Strom nur eine einzige Photovoltaikzelle umfasst.

4. Vorrichtung gemäß Anspruch 1 oder 2, wobei die Vorrichtung (6) zur Erzeugung von elektrischem Strom eine Parallelschaltung von wenigstens zwei Photovoltaikzellen umfasst.

5. Vorrichtung gemäß Anspruch 1 oder 2, wobei die Vorrichtung (6) zur Erzeugung von elektrischem Strom eine Parallelschaltung von zwei Photovoltaikzellen umfasst, wobei jeder Zweig der Parallelschaltung nur eine einzige Photovoltaikzelle umfasst.

6. Vorrichtung gemäß einem der vorstehenden Ansprüche, wobei der zweite Akkumulator (9) elektrischer Ladung wenigstens eine elektrochemische Zelle umfasst.

7. Vorrichtung gemäß einem der vorstehenden Ansprüche, wobei der zweite Akkumulator (9) elektrischer Ladung wenigstens eine Bleisulfatbatterie umfasst.

8. Vorrichtung gemäß Anspruch 6 oder 7, wobei der zweite Akkumulator (9) elektrischer Ladung wenigstens eine Traktionsbatterie oder Semitraktionsbatterie umfasst.

9. Vorrichtung gemäß einem der vorstehenden Ansprüche, wobei einer der Anschlüsse (2, 3) einen negativen Anschluss (5) eines angeschlossenen aufzuladenden Akkumulators (1) direkt mit einem negativen Anschluss (10) des zweiten Akkumulators (9) verbindet.

10. Vorrichtung gemäß einem der vorstehenden Ansprüche, wobei die stromerzeugende Vorrichtung (6) so angeordnet ist, dass sie ein Ausgangsspannungsdifferential innerhalb eines Bereichs liefert, der im Wesentlichen innerhalb eines Bereichs liegt, der durch den Unterschied zwischen der maximal zulässigen Ladespannung und der Spannung des aufzuladenden Akkumulators (1) im entladenen Zustand unter Last begrenzt ist.

11. Vorrichtung gemäß Anspruch 10, wobei der zweite Akkumulator (9) ein Spannungsdifferential aufweist, das gleich oder größer als eine Anschlussspannung eines aufzuladenden Akkumulators (1) ist, wenn er in einem entladenen Zustand unter Last vorliegt.

12. Verfahren zum Aufladen eines Akkumulators (1) elektrischer Ladung, umfassend das Bereitstellen einer Vorrichtung gemäß einem der Ansprüche 1 bis 11, Anschließen derselben an den aufzuladenden Akkumulator (1), und durch den Betrieb der Vorrichtung Erzeugen von elektrischem Strom durch Umwandlung von Energie, die extern in einer anderen Form denn als elektrische Energie zugeführt wird, und Liefern von Strom mit einem Ausgangsspannungsdifferential und Liefern eines Ladestroms an den aufzuladenden Akkumulator (1) mit einem aufgezwungenen Spannungsdifferential.

## Revendications

1. Appareil pour charger un accumulateur (1) de charge électrique, comprenant un appareil (6) pour générer un courant électrique par conversion d'énergie fournie de façon externe dans une forme autre que l'énergie électrique et pour fournir du courant à un différentiel de tension de sortie, et des bornes (2, 3) pour fournir un courant de charge audit accumulateur (1) à charger à un différentiel de tension imposé, l'appareil est en outre pourvu d'un second accumulateur (9) de charge électrique, qui est monté en série avec l'appareil (6) pour générer un courant électrique de sorte que d'autres composants actifs sont absents de l'appareil pour charger et une tension de somme de l'appareil (6) pour générer un courant électrique et du second accumulateur (9) est essentiellement rendue disponible à travers les bornes.

2. Appareil selon la revendication 1, dans lequel l'appareil (6) pour générer un courant électrique comprend au moins une cellule photovoltaïque.

3. Appareil selon la revendication 1, dans lequel l'appareil (6) pour générer un courant électrique comprend seulement une cellule photovoltaïque.

4. Appareil selon la revendication 1 ou 2, dans lequel l'appareil (6) pour générer un courant électrique comprend une connexion parallèle d'au moins deux cellules photovoltaïques.

5. Appareil selon la revendication 1 ou 2, dans lequel l'appareil (6) pour générer du courant électrique comprend une connexion parallèle de deux cellules photovoltaïques, dans lequel chaque branche de la connexion parallèle comprend seulement une cellule photovoltaïque.

6. Appareil selon l'une quelconque des revendications précédentes, dans lequel le second accumulateur (9) de charge électrique comprend au moins une cellule électrochimique.

7. Appareil selon l'une quelconque des revendications précédentes, dans lequel le second accumulateur (9) de charge électrique comprend au moins une batterie de sulfate de plomb.

8. Appareil selon la revendication 6 ou 7, dans lequel le second accumulateur (9) de charge électrique comprend au moins une batterie de traction ou une batterie de semi-traction.

9. Appareil selon l'une quelconque des revendications précédentes, dans lequel une des bornes (2, 3) relie une borne négative (5) d'un accumulateur raccordé (1) à charger directement à une borne négative (10) du second accumulateur (9).

10. Appareil selon l'une quelconque des revendications précédentes, dans lequel l'appareil de génération de courant (6) est disposé pour fournir un différentiel de tension de sortie dans une gamme se trouvant essentiellement dans une gamme délimitée par la différence entre la tension de charge admissible maximum et la tension dans un état déchargé sous la charge de l'accumulateur (1) à charger.

11. Appareil selon la revendication 10, dans lequel le second accumulateur (9) montre un différentiel de tension égal ou supérieur à une tension de borne d'un accumulateur (1) à charger lorsqu'il est dans un état déchargé sous charge.

12. Procédé de charge d'un accumulateur (1) de charge électrique, comprenant la fourniture d'un appareil selon l'une quelconque des revendications 1 à 11 le raccordant à l'accumulateur (1) à charger et à travers le fonctionnement de l'appareil générant un courant électrique par conversion d'énergie fournie de façon externe dans une forme autre que l'énergie électrique et la fourniture de courant à un différentiel de tension de sortie, et la fourniture d'un courant de charge à l'accumulateur (1) à charger à un différentiel de tension imposé.
